# DEMANDE DE BREVET EUROPEEN

(11) **EP 1 902 631 A2**
(43) Date de publication de la demande: **26.03.2008**
(21) Numéro de dépôt: 07301354.2
(22) Date de dépôt: 11.09.2007
(51) Int. Cl.: A23K 1/14, A23K 1/16, A23K 1/18, A23L 1/30, A23L 1/302

(54) **Additif antioxydant naturel d'origine végétale destiné à la nutrition animale**

(30) Priorité: 19.09.2006 FR 0653823
(71) Demandeur: Institut National de Recherche Agronomique, 75338 Paris Cedex 07 (FR)
(72) Inventeur: Durand, Denys, 63110, BEAUMONT (FR); Bauchart, Dominique, 63960, VEYRE-MONTON (FR); Gladine, Cécile, 63400, CHAMALIERES (FR); Gruffat, Dominique, 63450, TALLENDE (FR); Medina, Bertrand, 03200, VICHY (FR); Picaud, Thierry, 63200, RIOM (FR); Recoquillay, François, 95330, DOMONT (FR)
(74) Mandataire: Denjean, Eric

(57) **Abrégé**

Utilisation comme additif antioxydant destiné à être incorporé dans un aliment ou un complément alimentaire destiné au ruminant, d'au moins deux extraits végétaux choisis dans le groupe comprenant : extrait d'artichaut *(Cynara scolymus L.)*, extrait de romarin *(Rosmarinus officinalis L.)*, extrait de tagette *(Tagetes spp. (T. minuta, T. erecta))*, extrait de curcuma *(Curcuma longa L)*, extrait d'agrumes *(Citrus),* en particulier le pamplemousse, extrait d'ortie *(Urtica dioïca),* extrait d'ail *(Allium sativum),* extrait de pépins de raisins *(Vinis vitifera),* extrait de chardon-marie, *(Silybum marianum (L.) Asteraceae),* extrait d'andrographis *(Andrographis paniculata),* extrait de thé vert *(Camellia sinensis, Camellia thea Link.* / *Thea sinensis L.),* extrait de tomate *(Solanum lycopersicum L (Lycopersicum esculentum Mill).*

## Description

L'invention a pour objet un additif antioxydant d'origine végétale (AOV) destiné à la nutrition animale. Plus précisément, elle concerne un additif AOV naturel destiné à être incorporé dans les aliments composés pour animaux. L'additif de l'invention est plus particulièrement adapté à la nutrition des animaux d'élevage du type polygastrique (bovin, ovin, caprin,...), ou monogastrique (porc, volaille, lapin,...).

Dans la suite de la description, par l'expression « aliments composés », on désigne des substances organiques ou inorganiques en mélanges, comprenant ou non des additifs, qui sont destinés à la nutrition animale par voie orale sous forme d'aliments complets ou d'aliments complémentaires.

De même :
- par « aliment complet », on désigne un mélange d'aliments des animaux qui, grâce à leur composition, suffisent à assurer une ration journalière,
- par « aliment complémentaire », appelé également « concentré », on désigne un mélange contenant certains nutriments en concentration élevée, qui ajouté à d'autres matières premières ou aliment, permet de couvrir les besoins nutritionnels journaliers.

En pratique, l'aliment est en général un mélange préparé à partir de différentes matières premières végétales ( blé, maïs, orge, soja, pulpe de betterave,.......), en addition à une base (foin, paille,ensilage,....).

Enfin, par « supplément nutritionnel », on désigne des substances simples ou associées à but uniquement nutritionnel, qui, en raison de leur nature, de leur concentration ou de leurs conditions particulières d'emploi, sont destinées à supplémenter momentanément l'alimentation des animaux pour répondre à leurs besoins temporairement accrus dans certaines circonstances de leur élevage ou de leur vie".

De nombreuses recherches ont été conduites visant à augmenter la valeur nutritionnelle lipidique des produits animaux (viande, lait et dérivés laitiers ,oeuf), du point de vue de leur composition en acides gras polyinsaturés (AGPI). Dans ce but, la supplémentation de la ration journalière des animaux au moyen de matières grasses riches en AGPI, tels que notamment des huiles végétales, est de plus en plus conseillée. Ces apports accrus visent aussi à transférer au consommateur final (l'homme) une plus grande quantité d'acides gras polyinsaturés de type n-3 Toutefois, il a été rapporté que cette pratique augmentait de façon significative le risque de péroxydation des lipides, non seulement au niveau de l'animal lui-même (altération de sa santé), mais également au niveau de ses produits (détérioration des qualités nutritionnelles et organoleptiques de la viande et du lait). Par ailleurs, les radicaux libres oxygénés (RLO), impliqués dans un grand nombre de réactions d'oxydoréduction, sont régulièrement générés en quantité nécessaire et suffisante à la survie de la cellule. Toutefois, dans certaines situations physiologiques (gestation, lactation,...), pathologiques (infections, inflammations, stéatose hépatique,...) ou alimentaires (plan d'alimentation intensif, phase de restriction,...) ainsi que dans certaines conditions de stress d'origine environnementale (climatique, physique, émotionnel,...), une production excessive de RLO au sein de la cellule peut se produire, cette augmentation pouvant être très préjudiciable pour l'intégrité des différents constituants cellulaires et en particulier, des lipides membranaires.

Pour limiter ces phénomènes d'oxydation excessive des lipides endogènes de l'organisme, suite à un enrichissement en AGPI de la ration journalière des animaux, ou consécutif à une des situations particulière détaillées précédemment, il est préconisé d'apporter dans la ration des animaux des additifs capables de limiter les réactions d'oxydation soit en neutralisant les RLO (avant que ceux-ci n'attaquent les constituants cellulaires), soit en empêchant la propagation des réactions d'oxydation une fois celles-ci initiées.

En pratique, l'additif anti-oxydant le plus employé en nutrition animale est la vitamine E, en raison notamment de sa spécificité d'action (en particulier vis-à-vis des lipides) et de son faible coût.

Toutefois, l'apport en vitamine E présente au moins trois inconvénients.

Tout d'abord la vitamine E utilisée en nutrition animale est d'origine synthétique.

Par ailleurs son activité antioxydante présente un effet seuil au-delà duquel la vitamine E peut être non seulement moins active, mais s'avérer au contraire prooxydante.

Ensuite, la vitamine E n'intervient que dans un nombre limité d'étapes de la chaîne de réaction de peroxydation. En outre, il a été démontré que l'action de la vitamine E restait insuffisante pour prévenir les phénomènes de peroxydation lorsque la ration de l'animal est supplémentée avec des matières grasses, riches en AGPI.

L'invention a donc pour but de proposer un nouvel additif capable de limiter efficacement l'oxydation des lipides sanguins et corporels dans des conditions spécifiques, précédemment évoquées, et ce de manière à préserver les performances zootechniques, le bien-être et la santé de l'animal ainsi que les qualités nutritionnelles et organoleptiques de ses produits (viande, lait et dérivés laitiers, oeuf).

Un autre objectif de l'invention est de proposer une composition dont les propriétés antioxydantes vis-à-vis de l'oxydation des lipides sanguins et corporels soient également efficaces même dans le cas d'une supplémentation riches en AGPI.

L'invention a également pour but de développer un agent antioxydant qui soit efficace chez le ruminant, (en particulier le bovin, l'ovin et le caprin), attendu que les produits qui sont efficaces chez le monogastrique ne le sont pas forcément chez le polygastrique.

Enfin, en raison de contraintes sociologiques, le Demandeur a exclu d'emblée toute solution visant à utiliser des substances antioxydantes d'origine synthétique, pour satisfaire l'attente sociétale de naturalité. D'un point de vue économique enfin, l'objectif est de développer un produit à coût le plus faible possible.

Le Demandeur a solutionné l'ensemble de ces problèmes en mettant au point un additif AOV naturel comprenant, en tant que matière active, au moins un, avantageusement au moins deux extraits végétaux choisis dans le groupe comprenant: extrait d'artichaut *(Cynara scolymus L.),* extrait de romarin *(Rosmarinus officinalis L.),* extrait de tagette *(Tagetes spp. (T. minuta, T. erecta)),* extrait de curcuma *(Curcuma longa L),* extrait d'agrumes *(Citrus),* en particulier le pamplemousse, extrait d'ortie *(Urtica dioïca),* extrait d'ail *(Allium sativum),* extrait de raisins *(Vinis vitifera),* extrait de chardon-marie, *(Silybum marianum (L.) Asteraceae),* extrait d'andrographis *(Andrographis paniculata),* extrait de thé vert *(Camellia sinensis, Camellia thea Link.* / *Thea sinensis L.),* extrait de tomate *(Solanum lycopersicum L (Lycopersicum esculentum Mill).*

Plus précisément, l'invention a pour objet un additif AOV naturel destiné à être incorporé directement dans un aliment complet ou dans un aliment complémentaire ou dans un supplément nutritionnel destiné à l'animal, en particulier un ruminant comprenant, en mélange, au moins un extrait végétal choisi dans le groupe comprenant: extrait d'artichaut *(Cynara scolymus L.),* extrait de romarin *(Rosmarinus officinalis L.),* extrait de tagette *(Tagetes spp. (T. minuta, T. erecta)),* extrait de curcuma *(Curcuma longa L),* extrait d'agrumes *(Citrus),* en particulier le pamplemousse, extrait d'ortie *(Urtica dioïca),* extrait d'ail *(Allium sativum),* extrait de raisins *(Vinis vitifera),* extrait de chardon-marie, *(Silybum marianum (L.) Asteraceae),* extrait d'andrographis *(Andrographis paniculata),* extrait de thé vert *(Camellia sinensis, Camellia thea Link.* / *Thea sinensis L.),* extrait de tomate *(Solanum lycopersicum L (Lycoersicum esculentum Mill).*

Avantageusement, l'additif contient au moins un extrait de romarin.

Il a en effet été démontré que le pouvoir antioxydant de cet additif est particulièrement efficace sur les phénomènes d'oxydation des liquides sanguins et corporels et parfaitement adapté à la nutrition des ruminants sans que son action soit pour autant limitée à cette catégorie d'animaux.

En pratique, l'additif est incorporé dans l'aliment complet, l'aliment complémentaire ou le supplément nutritionnel. Dès lors, l'invention a également pour objet un aliment complet, un aliment complémentaire et un supplément nutritionnel incorporant un tel additif.

En général, l'additif antioxydant comprend au moins deux extraits, éventuellement au moins trois extraits végétaux, parmi les extraits précités. Préférentiellement, l'additif antioxydant comprend au moins quatre extraits précédemment cités.

Dans un premier mode de réalisation, l'additif anti-oxydant comprend, parmi les extraits précités, un extrait de romarin, un extrait de tagette, un extrait d'agrume, avantageusement de pamplemousse, et un extrait de raisins.

En pratique :
- l'extrait de romarin se présente sous la forme d'une poudre obtenue après séchage et broyage des feuilles,
- l'extrait de tagette est obtenu à partir des sommités florales,
- l'extrait d'agrume est obtenu à partir de la zone blanche de la pelure des fruits, extraction à l'eau chaude, ultrafiltration puis purification chromatographique,
- l'extrait de raisin est obtenu par extraction et purification des composés phénoliques des peaux et/ou des pépins et/ou des rafles de raisin utilisés par exemple, pour la production de vins blancs.

En pratique,la composition ci-dessus contient :
- entre 70 et 95% en poids d'extrait de romarin, avantageusement entre 85 et 95%,
- moins de 15% en poids, avantageusement entre 1 et 10% en poids d'extrait d'agrumes,
- entre 0,5 et 10% en poids, avantageusement entre 1,5 et 7% en poids d'extrait de raisin,
- entre 1 et 8% en poids, avantageusement entre 3 et 6% en poids d'extrait de tagette.

Dans un second mode de réalisation, l'additif anti-oxydant comprend, parmi les extraits précités, un extrait d'artichaut, un extrait de romarin, un extrait de raisin.

Dans un troisième mode de réalisation, l'additif anti-oxydant comprend, parmi les extraits précités, un extrait de romarin, un extrait de thé vert, un extrait de tagette, un extrait de chardon-marie.

Dans un quatrième mode de réalisation, l'additif anti-oxydant comprend, parmi les extraits précités, un extrait de romarin, un extrait de tomate, un extrait d'agrumes, un extrait d'artichaut.

Avantageusement, l'additif antioxydant est administré en présence de vitamine E. La vitamine E peut être soit déjà contenue dans l'aliment complet, le complément alimentaire ou le supplément nutritionnel, soit être incorporée dans l'additif antioxydant de l'invention. Dans tous les cas, les effets antioxydants de la vitamine E viendront compléter les effets antioxydants du produit de l'invention.

Comme déjà dit, l'additif de l'invention est destiné à être incorporée dans l'alimentation des ruminants ( ou des monogastriques), la ration étant supplémentée ou non en AGPI.

Le Demandeur a constaté que pour être efficace, cet additif peut être utilisé à raison d'une fourchette comprise entre 0,05 et 3% en poids de matière sèche de l'aliment complémentaire ou du supplément nutritionnel , avantageusement entre 0,2 et 2,% en poids de matière sèche.

L'invention et les avantages qui en découlent ressortiront mieux des exemples de réalisation suivants à l'appui des figures annexées.
La figure 1 est un schéma représentatif de mesure in vivo de l'efficacité des extraits végétaux de l'invention chez le rat.
La figure 2 est un graphique montrant l'effet des extraits de l'invention sur les concentrations plasmatiques en malondialdéhyde (MDA).
La figure 3 est un graphique montrant l'effet des extraits végétaux sur la durée de la phase de résistance à l'oxydation chez des rats recevant une alimentation riche en AGPI.
La figure 4 est un tableau montrant l'efficacité de protection des tissus (foie et muscle long dorsal (LT)) par les différents extraits végétaux de l'invention contre les processus de lipoperoxydation évaluée par la mesure des concentrations en malondialdéhyde (MDA) chez le Rat (n = 60) recevant des régimes enrichis en lipides
La figure 5 est un tableau montrant l'efficacité de protection des tissus (foie et muscle (LT)) par les différents extraits végétaux de l'invention évalué par la teneur en vitamine E et l'activité des enzymes antioxydantes (catalase et superoxyde dismutase (SOD))
La figure 6 est un schéma représentatif de mesure in vivo de l'efficacité des quatre extraits végétaux de l'invention chez le mouton.
La figure 7 est un graphique montrant les effet des extraits végétaux sur les cinétiques d'évolution du statut antioxydant (au cours des 30 heures suivant leur administration dans le rumen) mesuré dans le plasma des moutons recevant une infusion continue d'huile de lin (4% MSI de la ration).
La figure 8 est un graphique montrant l'effet du mélange d'extraits végétaux de l'invention et du niveau d'apport en vitamine E sur l'évolution de la teneur en MDA (exprimée par rapport au taux d'AGPI plasmatiques) entre la mise en régime et la fin de 7 semaines de supplémentation.
La figure 9 est un graphique montrant l'effet du mélange d'extraits végétaux de l'invention et de la vitamine E sur l'évolution de la phase de résistance à la peroxydation (lag-phase) (exprimée par rapport au taux d'AGPI plasmatiques) entre la mise en régime et la fin des 7 semaines de supplémentation

### I/ Mesure in vivo de l'efficacité de quatre extraits végétaux chez le rat

Afin de tester *in vivo* l'activité de 4 quatre extraits végétaux, le Rat a été utilisé comme animal modèle, les rats recevant une alimentation enrichie en lipides.

### 1 - Protocole réalisé

La capacité antioxydante de 4 quatre extraits de l'invention a été testée, sur des rats recevant un régime enrichi en lipides insaturés, au niveau plasmatique (pour évaluer les paramètres liés à la santé) et tissulaires (pour évaluer les paramètres liés plutôt aux qualités des produits). Les 4 quatre extraits ont été testés individuellement à la dose de 0,5% de la matière sèche (MS) de l'aliment. L'apport de matières grasses a été réalisé par l'addition d'huile de lin dans l'aliment à hauteur de 15% de la MS.

Le protocole mis en place est décrit dans le schéma 1. Les analyses réalisées concernent divers marqueurs du stress oxydatif (taux de production de malondialdéhyde et de diènes conjugués, statut antioxydant total, taux de vitamine E, activités d'enzymes antioxydantes).

### 2 - Résultats - Discussion

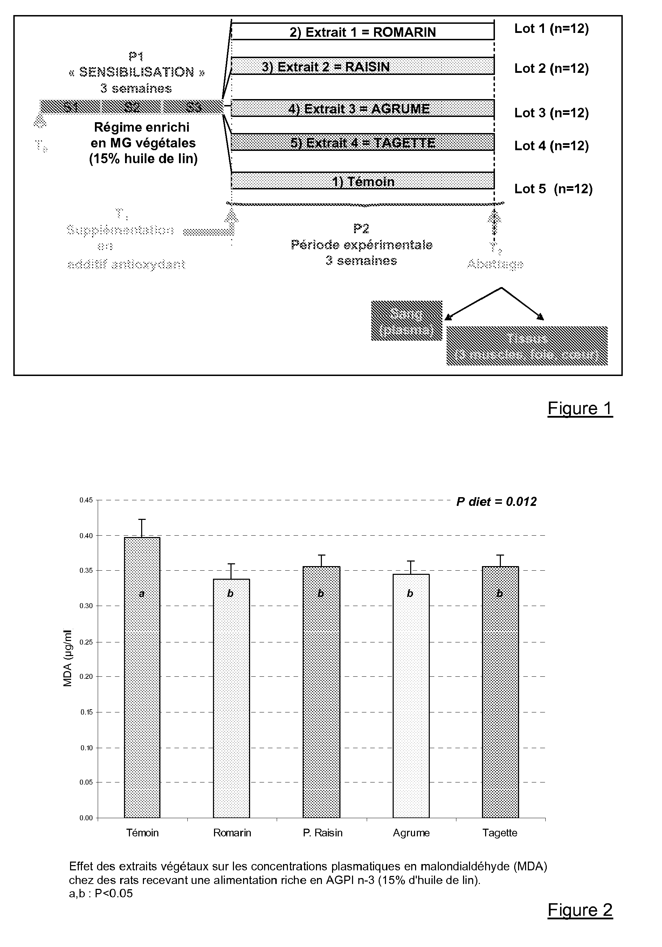

Le dosage du malondialdéhyde (MDA), produit terminal de la peroxidation des AGPI, réalisé au niveau plasmatique, permet de démontrer que les extraits végétaux ingérés quotidiennement pendant trois semaines ont limité les phénomènes de peroxydation (Figure 2). En effet, quelque soit l'extrait végétal, la concentration de MDA dans le plasma en fin de période expérimentale est diminuée significativement (-12%, P<0,001).

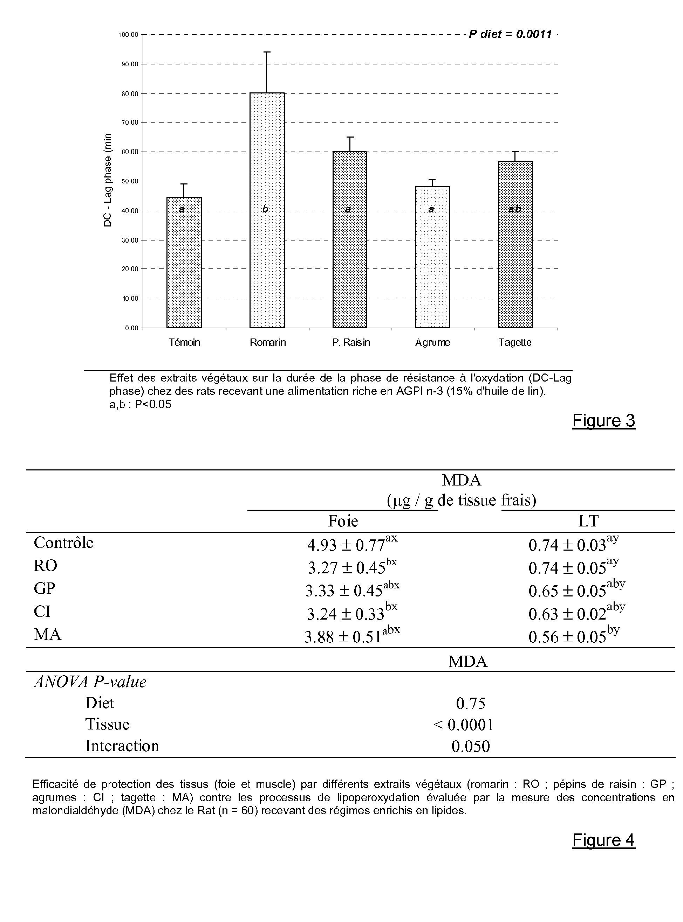

Dans le cas des autres paramètres plasmatiques dosés, les cinétiques de formation de diènes conjugués (DC) sont représentatives de la sensibilité des lipides du plasma aux phénomènes de peroxydation. L'apport d'extraits végétaux riches en antioxydants naturels a permis de retarder l'initiation de la lipoperoxydation comme le montre la Figure 3. En effet, la "lag phase" qui traduit le degré de résistance à l'oxydation (exprimé en temps), est très largement allongé chez les rats ayant reçu les extraits végétaux (+36%, P<0,01) en particulier avec l'extrait de Romarin (+ 80%, P<0.05).

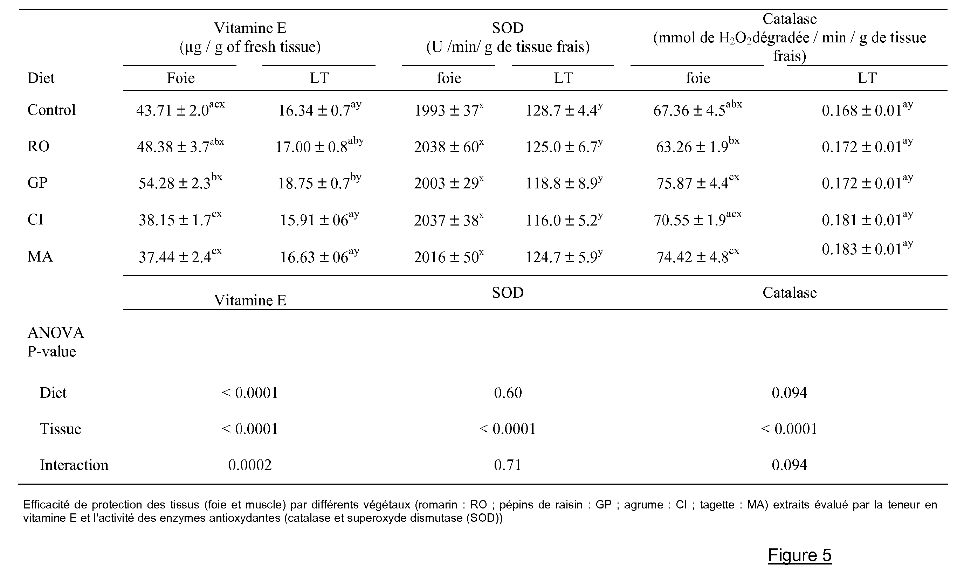

Au niveau des tissus, la production de MDA est significativement diminuée par les extraits végétaux dans le foie (-30%, P<0.05) et de façon moins marquée dans le muscle long dorsal (-24%, NS) (Figure 4). Selon le type d'antioxydant et le type de tissu considéré (foie ou muscle), les extraits végétaux sont capables d'épargner une partie de la vitamine E et/ou d'améliorer les niveaux des défenses endogènes en particulier de la catalase, enzyme intervenant dans la régulation des processus de peroxydation (Figure 5).

### 3 - Mécanismes d'action possibles

D'une façon générale, plusieurs mécanismes d'action peuvent être évoqués pour expliquer les effets protecteurs des extraits végétaux vis-à-vis des processus de peroxydation en particulier au niveau du muscle et du foie. Tout d'abord, il est possible que les antioxydants des extraits végétaux puissent interagir avec la vitamine E, soit par une action directe d'épargne soit par une action plus indirecte en favorisant son recyclage sous forme réduite. Il est également possible que les oxydant végétaux soient capables d'activer certaines enzymes antioxydantes de l'animal, ce qui pourrait expliquer l'activité accrue de la catalase observée avec les extraits de raisin et de la tagette.

Ces essais montrent donc que la protection des extraits sur les tissus s'exercerait vraisemblablement à différents niveaux de la chaîne de peroxydation comme le montre la variation des taux de vitamine E ou de l'activité des enzymes antioxydantes entre les différents lots.

### II/ Mesures de la bioefficacité in vivo d'extraits végétaux apportés individuellement en bolus et à hauteur de 10 % de la matière sèche chez le Ruminant

Les expérimentations décrites précédemment ayant été conduites chez le monogastrique, il convient d'évaluer l'efficacité de ces extraits chez le polygastrique. En effet, l'activité fermentaire très intense des microorganismes du rumen est susceptible de modifier la structure et donc la biodisponibilité des molécules actives des extraits végétaux de l'invention et diminuer voir annuler leur efficacité.

Pour effectuer ce test, le mouton a été choisi comme modèle du ruminant, et l'efficacité des différents extraits a été mesurée après qu'ils aient subi les différentes étapes de digestion et d'absorption. Afin de pouvoir mesurer un effet sur un temps très court (quelques heures), mais également d'exacerber les réponses éventuelles, des quantités relativement importantes d'extraits végétaux, (10 % de la MS) ont été apportées en une seule fois sous forme de bolus, ces doses ne pouvant être préconisées par la suite sur de longues périodes chez des animaux de production.

Les mesures ont donc été effectuées au niveau plasmatique chez des animaux ayant été au préalable "fragilisés" par un apport d'acides gras polyinsaturés correspondant à 4% de la MS. Pour que les animaux reçoivent des quantités suffisantes d'AGPI, et ne possédant pas de source d'AGPI parfaitement protégée de la biohydrogénation microbienne du rumen, les lipides insaturés ont été infusés directement au niveau du duodénum. Cette méthode originale, qui nécessite la pose de canules digestives par intervention chirurgicale, place les animaux dans les mêmes conditions alimentaires que les monogastriques et donc dans une situation complètement comparable à celle testée chez le rat.

### 1 - Protocole réalisé

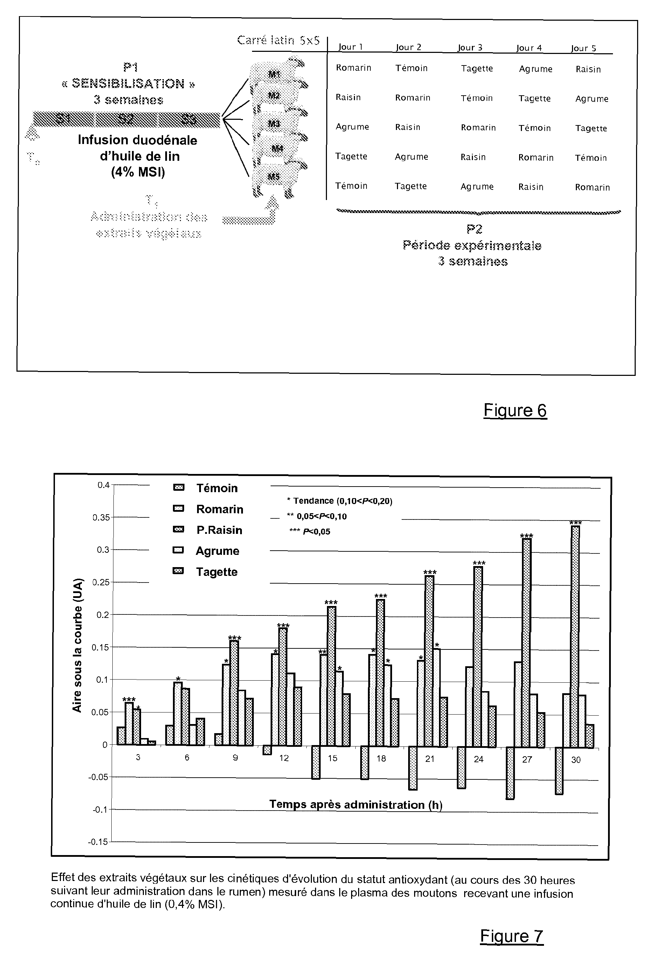

Les quatre extraits végétaux de l'invention (romarin, raisin, tagette et agrume) ont été administrés en bolus à hauteur de 10% de la matière sèche ingérée (MSI) directement dans le rumen des moutons grâce à une canule ruminale placée en chronique. Les moutons ont également été sensibilisés aux phénomènes de peroxydation par infusion continue d'huile de lin (4 % MSI) via une canule duodénale. Le protocole expérimental mis en place est rapporté dans la figure 6.

Divers paramètres oxydatifs (malondialdéhyde, statut antioxydant total, diènes conjugués) ont été dosés dans le plasma afin d'évaluer l'efficacité antioxydante des extraits végétaux administrés chez le polygastrique sensibilisé aux phénomènes de peroxydation.

### 2 - Résultats - Discussion

Le dosage plasmatique du statut antioxydant (SAO) permet d'évaluer la capacité du plasma à limiter les phénomènes d'oxydation. Ce statut antioxydant est lié à l'équilibre entre les substances antioxydantes, les substances pro-oxydantes et les substrats oxydables (lipides, protéines..) présentes dans le plasma. Ce paramètre a été mesuré en cinétique et l'évolution, selon l'extrait administré et le temps après distribution, est rapportée dans la Figure 7. Le SAO est augmenté chez les moutons ayant reçu les extraits végétaux en comparaison avec les moutons "Témoin". L'effet est particulièrement marqué pour l'extrait de romarin qui présente un maximum 15 heures après l'administration et pour l'extrait de raisin qui a entraîné l'augmentation régulière du SAO de 3h à 30h après administration, procurant ainsi une protection antioxydante accrue pendant plus d'une journée complète.

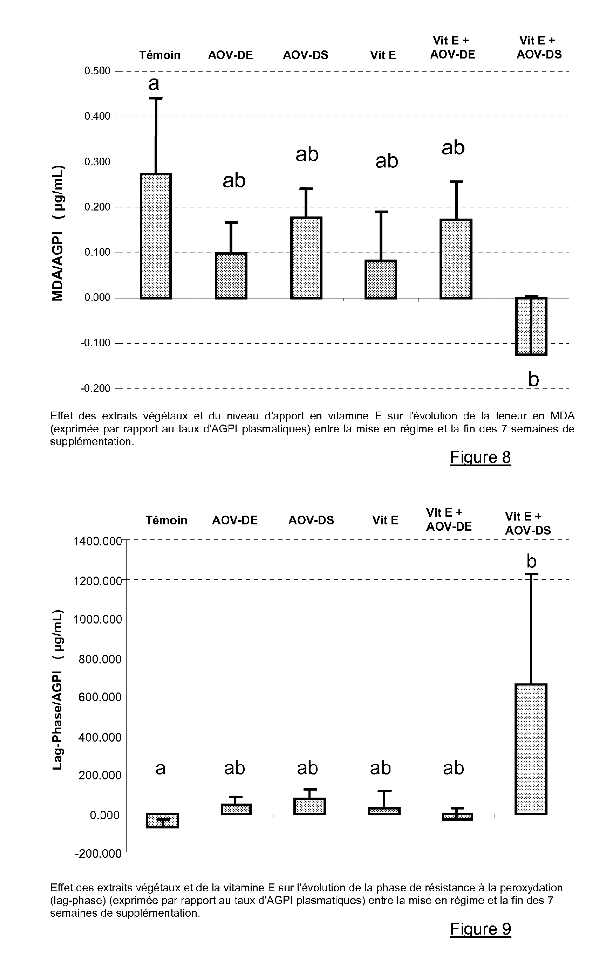

Les cinétiques de formation de diènes conjugués (DC) ont également été mesurées pour apprécier la susceptibilité du plasma aux phénomènes de peroxydation. L'apport d'extraits végétaux riches en antioxydants naturels a permis de retarder l'initiation de la peroxydation comme le montre la Figure 8. En effet, la valeur de la lag phase (qui représente la phase de résistance à l'oxydation) est très largement allongée chez les moutons ayant reçu les extraits végétaux (+ 36%, P<0,01) et en particulier avec l'extrait de romarin (+80%, P<0,05).

### III/ Mesure in vivo de la bioefficacité d'un mélange des 4 extraits végétaux chez le ruminant recevant des régimes hyperlipidiques ; synergie d'effets avec la vitamine E.

### Objectifs de cet exemple:

- tester l'effet des 4 extraits végétaux de l'invention, non pas apportés sous forme de bolus dans le rumen à la concentration de 10% de la MS, mais associés à la ration sur une période plus longue (10 semaines) et à des doses en accord avec les possibilités d'emploi du terrain (0,22 ou 1,1% de la MS),
- comparer la bioefficacité du mélange d'extraits végétaux à l'action d'une forte-dose de vitamine E,
- évaluer les synergies possibles de protection des lipides de la peroxydation des extraits végétaux avec la vitamine E.

### 1 - Protocole réalisé

Afin de tester l'efficacité du mélange d'extraits végétaux et la complémentarité éventuelle d'activité avec la vitamine E, le test a été réalisé sur des animaux placés en conditions d'élevage, c'est-à-dire en phase de production, non porteurs de canules (ruminale ou duodénale) et recevant une ration similaire à celles utilisées en pratique. Le mouton mâle en période de croissance (race Texel, âgé de 9 mois) recevant une ration à base de paille (ad libitum) et de concentré (1,5 kg/j) a été choisi comme animal modèle. Les rations étaient enrichies en AGPI par l'apport, dans le concentré, de graines de lin extrudées assurant un apport en matières grasses d'environ 4,5% par rapport à la MS de l'aliment concentré

Deux niveaux d'apport du mélange d'extraits végétaux de l'invention ont été testés :
- un apport à hauteur de 0,22 % de la MS de l'aliment concentré
- un apport à hauteur de 1,1 % de la MS,

Deux niveaux de vitamine E ont également été testés :
- un niveau "bas" (90 UI/j),
- un niveau "haut" (280 UI/j).

Composition du mélange (en pourcentage en poids):
- d'extrait de romarin 86%
- d'extrait de raisin 3%
- d'extrait d'agrume et 4%
- d'extrait de tagette 7%

Au final, six lots ont été constitués :

| n° de lot | Lot 1 n=6 | Lot 2 n=6 | Lot 3 n=6 | Lot 4 n=6 | Lot 5 n=6 | Lot 6 n=6 |
|---|---|---|---|---|---|---|
| nature des antioxydants | Témoin | AOV-DE | AOV-DS | VitE | VitE + AOV-DE | VitE + AOV-DS |
| Lipides (% de la MS) | 4,5% | 4,5% | 4,5% | 4,5% | 4,5% | 4,5% |
| Vitamine E (UI/j) | 90 | 90 | 90 | 280 | 280 | 280 |
| Extraits végétaux (% de la MS) | 0 | 0,22 ' | 1,1 ' | 0 | 0.22 | 1,1 |

lot 1 (Témoin) : lot dépourvu de supplément lipidique et d'extraits végétaux.
lot 2 (AOV (antioxydant végétal)-DE) : lot recevant le mélange d'extraits végétaux contenant des antioxydants à la dose de 0,22 % par rapport à la MS (dose "économique") et recevant la dose minimale en vitamine E (90UI/j).
lot 3 (AOV-DS) : lot recevant le mélange d'extraits végétaux contenant des antioxydants à la dose de 1.1 % par rapport à la MS (dose "scientifique") et recevant la dose minimale en vitamine E (90UI/j).
lot 4 (VitE) : lot recevant une forte dose en vitamine E (280 UI/j).
lot 5 (VitE + AOV-DE) : lot recevant de fortes doses en vitamine E soit 280 UI/j et le mélange d'extraits végétaux contenant des antioxydants à la dose de 0,22% par rapport à la MS.
lot 6 (VitE + AOV-DS) : lot recevant de fortes doses en vitamine E (280 UI/j) et le mélange d'extraits végétaux contenant des antioxydants à la dose de 1,1% par rapport à la MS.

Les animaux ont reçu les différents régimes pendant 7 semaines. Deux prélèvements sanguins ont été effectués, l'un en début d'expérimentation et l'autre après les 7 semaines de traitement. Divers paramètres oxydatifs (malondialdéhyde, statut antioxydant total, diènes conjugués,) ont été dosés dans le plasma afin d'évaluer la bioefficacité antioxydante des extraits végétaux administrés chez le polygastrique sensibilisé aux phénomènes de peroxydation.

### 2 - Résultats - Discussion

La Figure 8 rapporte le niveau plasmatique de produits peroxydés après les 7 semaines de supplémentation en AGPI. Comme attendu, l'intensité des processus de peroxydation a bien été augmentée par les apports d'AGPI très sensibles à la peroxydation. Concernant l'addition d'antioxydants, l'apport d'extraits végétaux (à la dose économique ou scientifique) ou de vitamine E réduit de façon importante (-50 à -70%) l'accumulation de produits peroxydés. Par contre, l'apport de vitamine E à dose élevée (280 UI/j) et d'extraits végétaux à dose forte (1,1%) décroît encore plus fortement (- 130%) la production de produits peroxydés.

De même, il apparaît clairement que la capacité à résister à l'oxydation mesurée in vitro sur plasma est améliorée par les différents traitements, cette augmentation étant la plus importante avec l'apport des deux sources d'antioxydants en même temps (Figure 9).

Enfin, les taux d'oxydation également mesurés sur plasma par la méthode in vitro, et témoignant de la vitesse de propagation des processus de peroxydation, sont fortement diminués par l'apport d'antioxydant de type végétal ou de vitamine E, ce ralentissement de cette baisse des processus de peroxydation étant plus important dans le lot recevant le doses les plus fortes.

Ainsi, il apparaît clairement que :
1) l'apport de lipides de type insaturé (sous forme de graines extrudées) pendant plusieurs semaines (7) à des moutons en croissance les fragilise de façon importante vis-à-vis des processus de peroxydation comme en témoigne les mesures in vivo de produits peroxydés (MDA) effectuées en fin de période de supplémentation et les mesures (effectuées in vitro) d'apparition de diènes conjugués déterminées après stress oxydant induit par ajout de cuivre,
2) l'apport d'antioxydants sous forme du mélange d'extraits de l'invention ou vitaminique dans la ration va réduire en partie l'intensité de ces peroxydations et améliorer la capacité des animaux à résister au stress oxydant (mesurée par une approche in vitro),
3) l'apport simultané des deux antioxydants (végétal et vitaminique) et aux doses les plus élevées permet de prévenirles processus de peroxydation.

Concernant les mécanismes d'action possibles des différents antioxydants utilisés et plus particulièrement leur effet synergique, les antioxydants végétaux peuvent compléter l'action de la vitamine E en intervenant à d'autres niveaux de la chaîne de peroxydation et/ou directement régénérer la vitamine E la rendant donc plus disponible.

## Revendications

1. Utilisation comme additif antioxydant destiné à être incorporé dans un aliment ou un complément alimentaire destiné au ruminant, d'au moins deux extraits végétaux choisis dans le groupe comprenant : extrait d'artichaut *(Cynara scolymus L.),* extrait de romarin *(Rosmarinus officinalis L.),* extrait de tagette *(Tagetes spp. (T. minuta, T. erecta)),* extrait de curcuma *(Curcuma longa L),* extrait d'agrumes *(Citrus),* en particulier le pamplemousse, extrait d'ortie *(Urtica dioïca),* extrait d'ail *(Allium sativum),* extrait de pépins de raisins *(Vinis vitifera),* extrait de chardon-marie, *(Silybum marianum (L.) Asteraceae),* extrait d'andrographis *(Andrographis paniculata),* extrait de thé vert *(Camellia sinensis, Camellia thea Link.* / *Thea sinensis L.),* extrait de tomate *(Solanum lycopersicum L (Lycopersicum esculentum Mill).*

2. Utilisation selon la revendication 1, **caractérisée en ce que** l'additif contient un extrait de romarin, un extrait de raisin, un extrait de tagette et un extrait d'agrumes.

3. Utilisation selon l'une des revendications 1 à 2 dans un aliment destiné à l'animal, à raison de 0,5 à 3% en poids de matière sèche, avantageusement entre 0,2 et 2% en poids de matière sèche de l'aliment complémentaire ou du supplément alimentaire.

4. Utilisation selon la revendication 1, **caractérisée en ce que** l'additif contient :
- entre 70 et 95% en poids d'extrait de romarin, avantageusement entre 85 et 95%,
- moins de 15% en poids, avantageusement entre 1 et 10% en poids d'extrait d'agrumes,
- entre 0,5 et 10% en poids, avantageusement entre 1,5 et 7% en poids d'extrait de pépin de raisin,
- entre 1 et 8% en poids, avantageusement entre 3 et 6% en poids d'extrait de tagette.

5. Utilisation selon l'une des revendications 1 à 4, **caractérisé en ce que** l'additif est administré simultanément avec de la vitamine E.

6. Additif antioxydant destiné à être incorporé dans un aliment, un complément alimentaire ou un supplément alimentaire destiné au ruminant **caractérisé en ce qu'**il comprend, en mélange, un extrait de romarin, un extrait de tagette, un extrait d'agrumes, un extrait de raisin.

7. Additif selon la revendication 6, **caractérisé en ce qu'**il contient:
- entre 70 et 95% en poids d'extrait de romarin, avantageusement entre 85 et 95%,
- moins de 15% en poids, avantageusement entre 1 et 10% en poids d'extrait d'agrumes,
- entre 0,5 et 10% en poids, avantageusement entre 1,5 et 7% en poids d'extrait de pépin de raisin,
- entre 1 et 8% en poids, avantageusement entre 3 et 6% en poids d'extrait de tagette.

8. Additif antioxydant destiné à être incorporé dans un aliment, un complément alimentaire ou un supplément alimentaire destiné au ruminant **caractérisé en ce qu'**il comprend, en mélange, un extrait d'artichaut, un extrait de romarin, un extrait de raisin.

9. Additif antioxydant destiné à être incorporé dans un aliment, un complément alimentaire ou un supplément alimentaire destiné au ruminant **caractérisé en ce qu'**il comprend un extrait de romarin, un extrait de thé vert, un extrait de tagette, un extrait de chardon-marie.

10. Additif antioxydant destiné à être incorporé dans un aliment, un complément alimentaire ou un supplément alimentaire destiné au ruminant **caractérisé en ce qu'**il comprend un extrait de romarin, un extrait de tomate, un extrait d'agrumes, un extrait d'artichaut.
